# EUROPEAN PATENT SPECIFICATION

(11) **EP 1 912 017 B1**
(45) Date of publication and mention of the grant of the patent: **23.02.2011**
(21) Application number: 07019968.2
(22) Date of filing: 11.10.2007
(51) Int. Cl.: F21S 8/10, F21Y 101/02

(54) **Vehicular lamp**
Fahrzeuglampe
Lampe véhiculaire

(30) Priority: 13.10.2006 JP 2006279824
(43) Date of publication of application: 16.04.2008
(73) Proprietor: Stanley Electric Co., Ltd., Meguro-ku Tokyo 153-8636 (JP)
(72) Inventor: Koike, Teruo c/o Stanley Electric Co., Ltd., Tokyo 153-8636 (JP); Owada, Ryotaro c/o Stanley Electric Co., Ltd., Tokyo 153-8636 (JP)
(74) Representative: Wagner, Karl H.

(56) References cited:
- EP-A- 1 342 616
- EP-A- 1 557 605
- DE-A1- 4 129 955
- DE-A1- 10 065 020
- DE-A1- 10 115 868
- DE-C1- 10 202 323
- JP-A- 2001 206 267
- US-A- 5 918 973
- US-A1- 2005 180 158

## Description

### BACKGROUND OF THE INVENTION

### Field of the Invention

The present invention relates toavehicular lamp including an LED-based light source, more particularly to a structure thereof in consideration of the appearance at the time of light on.

### Description of the Related Art

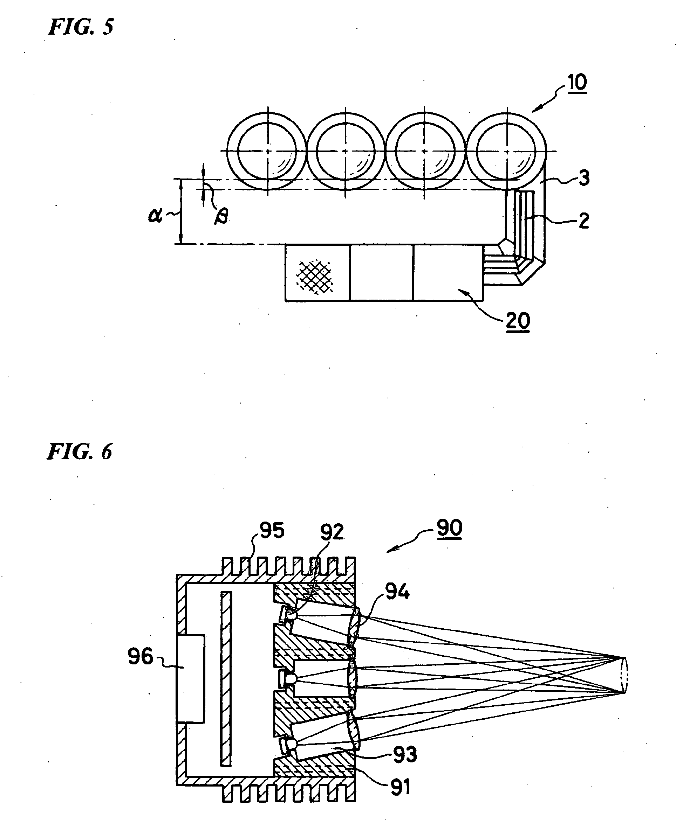

A conventional lamp 90 including an LED-based light source may be configured as exemplified in Fig. 6. In this example, a metal block 91 excellent in thermal conduction is processed to form cylinder bores 93 in a honeycomb shape or a revolver shape so that a plurality of light source LEDs 92 can be attached thereto. The light source LEDs 92 are attached to the cylinder bores 93 at one end to achieve several times higher brightness than that of a single light source LED 92 in accordance with the number of the light source LEDs 92.

Condenser lenses 94 for collecting light may be attached to the cylinder bores 93 provided through the metal block 91, at the other end opposite to the attachedLEDs 92. Alternatively, the central lines of the cylinder bores 93 may be formed to intersect at one point. In such the case, the brightness at the intersection can be enhanced further.

If a number of light source LEDs 92 are attached to the metal block 91, heat produced from the light source LEDs 92 makes the metal block 91 impossible to radiate the heat by itself and lowers the efficiency of emitting light from the light source LEDs 92. Therefore, a cooling fin-attached case 95 is located around the metal block 91 to surround it and a cooling motored fan 96 is provided on the case 95 for cooling the light source LEDs 92 (see Patent Document 1: JP 2006-228694A).

As describe above, the light source LEDs 92 can not be used in a state that requires cooling as in halogen bulbs and metal halide discharge lamps conventionally used. Accordingly, in particular, when used in light sources for brighter lamps such as vehicular lamps, the cooling issue can not be neglected. As a result, the use of a plurality of light source LEDs 92, for example, requires a cooling means such as a cooling fin provided outside the case 95. Thus, the size of the condenser lens serving as a light-emitting portion increases the size of the lamp 90 itself proportionally.

Therefore, if plural such lamps 90 are used to form a low beam distribution or one function of the low beam distribution, for example, light-emitting portions are spaced from each other. In this case, a lamp with one function causes a problem associated with the arrangement of light-emitting portions spaced from each other at an interval of 15 mm or below so that they can not be seen dispersed.

DE 102 02 323 C1 was used as a basis for the preamble of claim 1 and discloses an illumination unit having an additional lamp for a motor vehicle. A vehicle light adapted to be used as a stationary light and/or indicator light has a light guide body formed as a light diffuser, and a lamp element adapted to be affixed thereto at a light input position. More particularly, an illumination unit for a motor vehicle has a first reflector light and a second reflector light for high beam and low beam, respectively. An additional light adapted to be used as a stationary light and/or indicator light is arranged between the two reflector lights, wherein said additional light is formed as a light guide body essentially taking up the space between the first and second reflector lights, and has a light diffusing surface zone as a light output area as well as an extension for arrangement of a lamp holder.

### SUMMARY OF THE INVENTION

The present invention is directed to solving the problems and/or avoiding the disadvantages outlined above, and provides a vehicular lamp as set forth in claim 1. A preferred embodiment of the present invention may be gathered from the dependent claim.

In the present invention, a light guide lens is provided to guide light from any lamp into a non-light-emitting portion left between plural lamps to create light emission therefrom. This makes it possible to eliminate the non-light-emitting portion that has been inevitably left wider for cooling the LEDs conventionally. This is extremely effective to improve the designs of lamps and vehicles because the design can be obtained as an integral lamp.

### BRIEF DESCRIPTION OF THE DRAWINGS

Fig. 1 is a front view showing a vehicular lamp according to the present invention, which is attached to a vehicle.
Fig. 2 is a cross-sectional view taken along A-A line in Fig. 1.
Fig. 3 is an illustrative view showing a light guide lens attached in a manner.
Fig. 4 is a perspective view showing an example of the structure of the light guide lens.
Fig. 5 is an illustrative view showing the light guide lens and an extension attached to a lamp unit in another manner.
Fig. 6 is an illustrative view showing an example of prior art.

### DETAILED DESCRIPTION OF THE EMBODIMENTS

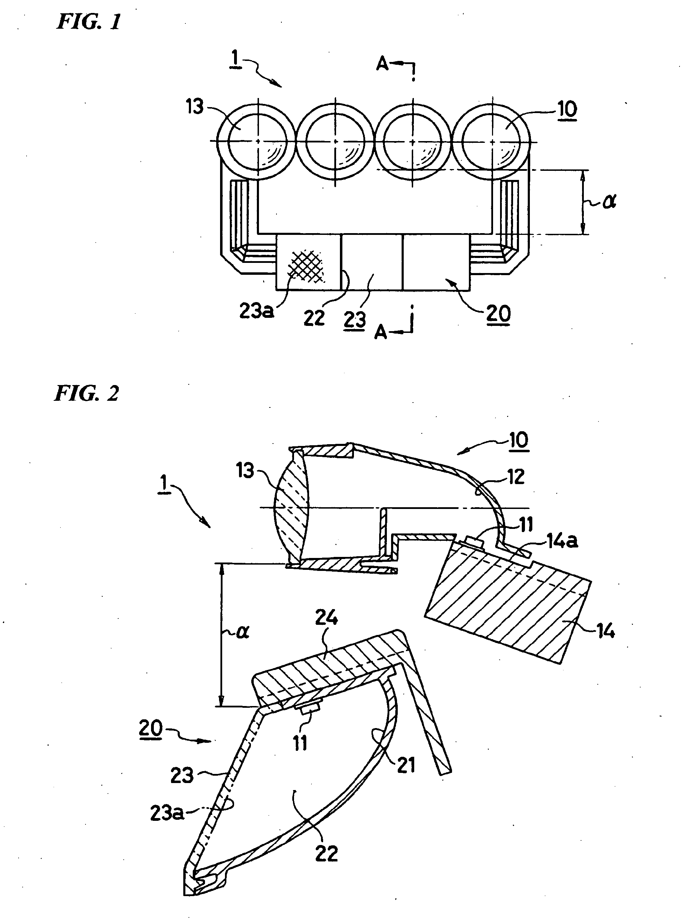

The present invention will now be described in detail based on the embodiments shown in the figures. Fig. 1 shows a vehicular lamp 1 according to the present invention. The vehicular lamp 1 herein shown is an example for a low beam distribution, which is formed of two types in combination: an elliptical reflecting surface-type lamp unit 10 including an LED-based light source, and a parabolic reflecting surface-type lamp unit 20 including an LED-based light source.

The vehicular lamp 1 of the present invention uses a plurality of such elliptical reflecting surface-type lamp units 10 and a plurality of such parabolic reflecting surface-type lamp units 20. The illuminating lights from the elliptical reflecting surface-type lamp units 10 and the illuminating lights from the parabolic reflecting surface-type lamp units 20 are combined to achieve a desired brightness and light distribution.

Fig. 2 shows the elliptical reflecting surface-type lamp unit 10 and the parabolic reflecting surface-type lamp unit 20 attached to a vehicle in a brief cross-sectional view. The elliptical reflecting surface-type lamp unit 10 is arranged at an upper location and the parabolic reflecting surface-type lamp unit 20 is arranged beneath the elliptical reflecting surface-type lamp unit 10. This is the so-called two-floor structure.

The elliptical reflecting surface-type lamp unit 10 is structured similar to a lamp of the system called the projection type. In this unit, a light source or LED 11 has a narrower light-emitting angle than bulbs and discharge lamps. Accordingly, the direction of light emission is appropriately tilted upward and rearward relative to an elliptical reflecting surface 12 such that the light emitted from the LED 11 and reflected at the reflecting surface can efficiently enter a projection lens 13.

The LED 11 is attached to a heat sink 14 for heat radiation. In this case, the heat sink 14 can be brought into intimate contact with the LED 11 for efficient heat radiation by tilting an attachment surface 14a downward and rearward at the same angle as the bottom of the above-described LED 11.

On the other hand, the parabolic reflecting surface-type lamp unit 20 has a reflecting surface 21 basically formed in a parabolic surface that focuses on the LED 11, and standing sidewalls 22 formed on the left and right sides. Such the shape is intended to provide an appropriate width of the reflecting surface 21 to achieve a parallel beam, which has an illumination angle appropriately extending in the lateral direction of the vehicle and illuminates toward the horizon in the vertical direction of the vehicle.

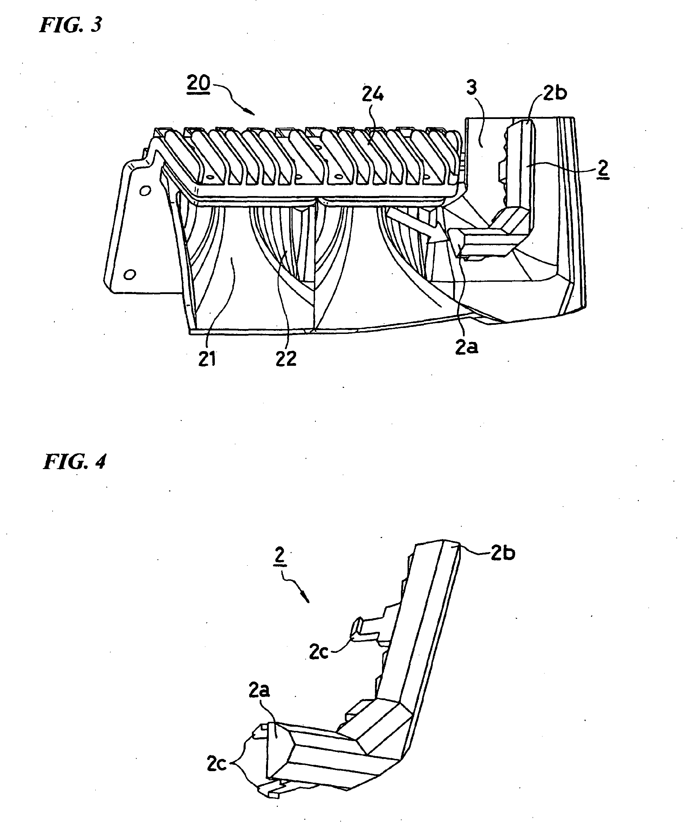

The reflecting surface 21 may be formed in a rotating parabolic surface without restraint. In this case, a parallel beam can be applied not only in the vertical direction but also in the lateral direction of the vehicle. Alternatively, the standing sidewalls 22 on the left and right sides of the reflecting surface 21 may be formed in appropriately protruded shapes to additionally extend the spread of the illuminating light in the lateral direction (see Fig. 3).

Also in the parabolic reflecting surface-type lamp unit 20, an improvement is required in efficiency associated with the reflecting surface 21 to reflect the light emitted from the LED 11. Therefore, the LED 11 is arranged to have a direction of light emission tilted downward and rearward relative to the directionof illumination from the vehicular lamp 1. Accordingly, a heat sink 24 for use in attachment of the LED 11 is tilted forward and downward.

A lens 23 with lens cuts 23a applied thereon is attached in front of the reflecting surface 21 to correct the light distribution to have a more desirable shape that can not be achieved sufficiently by the reflecting surface 21 and the standing walls 22. As described above, if the heat sink 24 is tilted forward and downward, the light source or LED 11 can not be seen directly through the lens 23 and the surface of the lens 23 has uniform brightness. The lens 23 may be omitted if an outer lens (not shown) used to cover the whole of the vehicular lamp 1 also serves as the lens 23.

As described above, in the present invention, the elliptical reflecting surface-type lamp units 10 and the parabolic reflecting surface-type lamp units are combined to configure the vehicular lamp 1 for the low beam distribution. As obvious from the above description, the elliptical reflecting surface-type lamp units 10 are provided with the heat sink 14 attached on the lower side while the parabolic reflecting surface-type lamp units 20 are provided with the heat sink 24 attached on the upper side.

The elliptical reflecting surface-type lamp units 10 located on the upper position are provided with the projection lens 13 on the upper portion. In contrast, the parabolic reflecting surface-type lamp units 20 located on the lower position are provided with the lens 23 on the lower portion. Thus, the heat sinks 14, 24 are sandwiched therebetween to leave a large interval α between the projection lens 13 and the lens 23 (see Fig. 1). As a result, the elliptical reflecting surface-type lamp units 10 and the parabolic reflecting surface-type lamp units 20 are hardly identified integral, that is, as the same-purposed lamps when observed from external.

In the present invention, there is provided a light guide lens 2 extending from the projection lens 13 to the lens 23, that is, between the upper and lower light-emitting portions as shown in Fig. 3. The light guide lens 2 is provided between the elliptical reflecting surface-type lamp unit 10 and the parabolic reflecting surface-type lamp unit 20. It is formed in such a shape that allows the two lamp units 10 and 20 to be identified as an identical lamp in terms of design.

Fig. 4 shows an example of the structure of the light guide lens 2. In this example, the light guide lens 2 is formed in an almost L-shaped rod of transparent resinous material. A tip 2a of the almost L-shaped rod is inserted into the parabolic reflecting surface-type lamp unit 20 to guide the direct light from the LED 11 into the light guide lens 2 through the end surface of the tip 2a.

Another tip 2b of the light guide lens 2 is extended to a position in the vicinity of the projection lens 13 in the elliptical reflecting surface-type lamp unit 10. The light guide lens 2 has a front surface or a rear surface appropriately shaped, for example, aventurine, serrated or lens-cut to make the front surface brightly shine.

Further, a shine-processed, such as chromium-plated, extension 3 is additionally provided at the rear of the light guide lens 2 as shown in Figs. 1 and 5 to reflect the light from the light guide lens 2. In this case, the extension 3 is also designed to match the elliptical reflecting surface-type lamp unit 10 and the parabolic reflecting surface-type lamp unit 20. In Fig. 4 the reference numeral 2c denotes a hook, which is used to hook the light guide lens 2 on the extension 3.

The light guide lens 2 and the extension 3 may be connected to the elliptical reflecting surface-type lamp units 10 and the parabolic reflecting surface-type lamp units 20 at one location on one side of respective rows as shown in Fig. 5. Alternatively, they may be connected at two locations on both sides as shown in Fig. 1. Further, although omitted from the figure, if they are disengaged at one location on one side as shown in Fig. 5, only the light guide lens 2 may be removed, leaving the extension 3 connected. In a word, a design is preferable if it allows an observer to view the elliptical reflecting surface-type lamp units 10 and the parabolic reflecting surface-type lamp units 20 as an integral lamp.

Conventionally, a non-light-emitting interval α of about 45 mm is left between a light-emitting portion (projection lens 13) in the elliptical reflecting surface-type lamp unit 10 and a light-emitting portion (lens 23) in the parabolic reflecting surface-type lamp unit 20. In contrast, the above configuration in the present invention provided with the light guide lens 2 and the extension 3 can reduce the non-light-emitting interval β to around 15 mm as shown and arrange both the lamp units 10, 20 as integrated.

The present invention is not limited to the shapes, the positions for attachment, and the number of installation of the light guide lenses 2 and the extensions 3 as shown in Fig. 1 or Fig. 5. Within the portion of the non-light-emitting interval α between the elliptical reflecting surface-type lamp unit 10 and the parabolic reflecting surface-type lamp unit 20, the shapes, the positions for attachment, and the number of installation can be set without restrain. The light guide lens plate may be given lens cuts without restrain. The light guide lens 2 may be provided in the form of a prism lens to receive light from at least the lamp unit 20 and release the light.

## Claims

1. A vehicular lamp (1), which comprises multi-system optical units (10, 20) of an elliptical reflecting surface-type and a parabolic reflecting surface-type in combination, each optical unit (10, 20) including an LED (11) as a light source, **characterized in that** a non-light-emitting interval between the optical units (10, 20) is made equal to 15 mm or below by providing a light guide lens (2) and an extension (3) surrounding the light guide lens (2) between the optical units (10, 20), and an interval between light-emitting portions in the optical units (10, 20) is larger than the above numeric value,
wherein the light guide lens (2) receives at a tip (2a) thereof the light from the LED (11) in the optical unit (20) of the parabolic reflecting surface-type,
wherein the light received from the LED (11) is reflected at an appropriately shaped front or rear surface of the light guide lens (2) and at the extension (3), and is released toward the front surface.

2. The vehicular lamp according to claim 1, **characterized in that** the light guide lens (2) is provided in the form of a prism lens.

## Patentansprüche

1. Eine Fahrzeuglampe (1), die Multisystem-Optikeinheiten (10, 20) vom Typ einer elliptischen reflektierenden Oberfläche und vom Typ einer parabolischen reflektierenden Oberfläche in Kombination aufweist, wobei jede Optikeinheit (10, 20) eine LED (11) als Lichtquelle umfasst, **dadurch gekennzeichnet, dass** ein kein Licht emitierendes Intervall zwischen den Optikeinheiten (10, 20) gleich 15 mm oder weniger gemacht ist durch Vorsehen einer Lichtleiterlinse (2) und einer Erweiterung (3), welche die Lichtleiterlinse (2) zwischen den Optikeinheiten (10, 20) umgibt, und dass ein Intervall zwischen lichtemitierenden Teilen in den optischen Einheiten (10, 20) größer ist als der obige Zahlenwert,
wobei die Lichtleiterlinse (2) an einem Ende (2a) davon das Licht von der LED (11) in der optischen Einheit (20) vom Typ mit einer parabolischen reflektierenden Oberfläche empfängt,
wobei das von der LED (11) empfangene Licht an einer passend geformten Vorder- oder Rückseite der Lichtleiterlinse (2) und an der Erweiterung (3) reflektiert wird und zu der Vorderseite hin abgegeben wird.

2. Fahrzeuglampe gemäß Anspruch 1, **dadurch gekennzeichnet, dass** die Lichtleiterlinse (2) in Form einer Prismenlinse vorgesehen ist.

## Revendications

1. Feu de véhicule (1), qui comprend des unités optiques multisystèmes (10, 20) d'un type à surface réfléchissante elliptique et d'un type à surface réfléchissante parabolique en combinaison, chaque unité optique (10, 20) comprenant une DEL (11) en tant que source de lumière, **caractérisé en ce qu'**un intervalle de non émission de lumière entre les unités optiques (10, 20) est égal à 15 mm ou moins du fait de la prévision d'une lentille de guidage de lumière (2) et d'une extension (3) entourant la lentille de guidage de lumière (2) entre les unités optiques (10, 20), et un intervalle entre les parties d'émission de lumière dans les unités optiques (10, 20) est supérieur à la valeur numérique ci-dessus,
dans lequel la lentille de guidage de lumière (2) reçoit, à une extrémité (2a) de celle-ci, la lumière provenant de la DEL (11) dans l'unité optique (20) du type à surface réfléchissante parabolique,
dans lequel la lumière reçue de la DEL (11) est réfléchie au niveau d'une surface avant ou arrière de forme appropriée de la lentille de guidage de lumière (2) et au niveau de l'extension (3), et est libérée vers la surface avant.

2. Feu de véhicule selon la revendication 1, **caractérisé en ce que** la lentille de guidage de lumière (2) est prévue sous la forme d'une lentille prismatique.
